# EUROPÄISCHE PATENTANMELDUNG

(11) **EP 2 709 246 A1**
(43) Veröffentlichungstag der Anmeldung: **19.03.2014**
(21) Anmeldenummer: 12184264.5
(22) Anmeldetag: 13.09.2012
(51) Int. Cl.: H02K 9/06, H02K 9/22, H02K 21/22

(54) **Einrichtung mit elektrischer Maschine in Leichtbauweise**

(71) Anmelder: Siemens Aktiengesellschaft, 80333 München (DE)
(72) Erfinder: Ballauf, Christian, 80638 München (DE); Jajtic, Zeljko, 80992 München (DE); Matscheko, Gerhard, 82319 Starnberg (DE)

(57) **Zusammenfassung**

Eine Einrichtung weist einen Grundkörper (1) und eine elektrische Maschine (2) auf. Die elektrische Maschine (2) weist ein Statorpaket (4) und einen Rotor (6) auf. Der Rotor (6) ist relativ zum Statorpaket (4) in einer Lagereinrichtung (7) gelagert, so dass der Rotor (6) relativ zum Statorpaket (4) um eine Rotationsachse (8) rotierbar ist. Der Rotor (6) ist als Außenläufer ausgebildet, so dass radial zur Rotationsachse (8) gesehen das Statorpaket (4) zwischen dem Rotor (6) und der Rotationsachse (8) angeordnet ist. Der Grundkörper (1) ist zumindest teilweise radial innerhalb des Statorpakets (4) angeordnet. Das Statorpaket (4) ist an eine Kühleinrichtung (5) thermisch angekoppelt, so dass im Statorpaket (4) entstehende Wärme in die Kühleinrichtung (5) eingeleitet wird. In die Kühleinrichtung (5) eingeleitete Wärme wird mittels die Kühleinrichtung (5) axial durchströmender Kühlluft (10) aus der Kühleinrichtung (5) abgeführt. Das Statorpaket (4) ist über die Kühleinrichtung (5) mit dem Grundkörper (1) verbunden, so dass das Statorpaket (4) mittels der Kühleinrichtung (5) relativ zum Grundkörper (1) axial und radial fixiert ist. Ein zwischen dem Statorpaket (4) und dem Rotor (6) wirkendes Drehmoment wird mittels der Kühleinrichtung (5) am Grundkörper (1) abgestützt.

## Beschreibung

Die vorliegende Erfindung betrifft eine Einrichtung,
- wobei die Einrichtung einen Grundkörper und eine elektrische Maschine aufweist,
- wobei die elektrische Maschine ein Statorpaket und einen Rotor aufweist,
- wobei der Rotor relativ zum Statorpaket in einer Lagereinrichtung gelagert ist, so dass der Rotor relativ zum Statorpaket um eine Rotationsachse rotierbar ist,
- wobei der Rotor als Außenläufer ausgebildet ist, so dass radial zur Rotationsachse gesehen das Statorpaket zwischen dem Rotor und der Rotationsachse angeordnet ist,
- wobei der Grundkörper zumindest teilweise radial innerhalb des Statorpakets angeordnet ist,
- wobei das Statorpaket an eine Kühleinrichtung thermisch angekoppelt ist, so dass im Statorpaket entstehende Wärme in die Kühleinrichtung eingeleitet wird,
- wobei die in die Kühleinrichtung eingeleitete Wärme mittels die Kühleinrichtung axial durchströmender Kühlluft aus der Kühleinrichtung abgeführt wird.

Derartige Einrichtungen sind allgemein bekannt. Insbesondere ist nahezu jeder übliche Außenläufermotor, der in eine Einrichtung eingebaut ist, derart aufgebaut.

Im Rahmen von mobilen Anwendungen spielt das Leistungsgewicht von Elektromotoren eine große Rolle. Insbesondere wird versucht, das Gewicht der Elektromotoren so weit wie möglich zu reduzieren. Gewichtseinsparungen werden sowohl bei den sogenannten Aktivteilen (d.h. den elektromagnetisch aktiven Komponenten, also Magneten und Wicklungen sowie Blechen bzw. Blechpaketen) als auch bei den übrigen Komponenten, den sogenannten Passivteilen, angestrebt.

Im Stand der Technik wird in der Regel versucht, die einzelnen Komponenten der Systeme zu optimieren. Ein besonders großes Potenzial liegt jedoch im integrativen Leichtbau, beispielsweise durch strukturelle und funktionelle Integration von Aktiv- und Passivteilen.

Die Aufgabe der vorliegenden Erfindung besteht darin, eine Einrichtung mit einer elektrischen Maschine in Leichtbauweise zu schaffen, bei welcher ein derartiger integrativer Leichtbau in effizienter Weise realisiert ist.

Die Aufgabe wird durch eine Einrichtung mit den Merkmalen des Anspruchs 1 gelöst. Vorteilhafte Ausgestaltungen der erfindungsgemäßen Einrichtung sind Gegenstand der abhängigen Ansprüche 2 bis 13.

Erfindungsgemäß wird eine Einrichtung der eingangs genannten Art dadurch weiter entwickelt, dass das Statorpaket über die Kühleinrichtung mit einem radial innerhalb des Statorpakets angeordneten Grundkörper verbunden ist, so dass das Statorpaket mittels der Kühleinrichtung relativ zum Grundkörper axial und radial fixiert ist und ein zwischen dem Statorpaket und dem Rotor wirkendes Drehmoment mittels der Kühleinrichtung am Grundkörper abgestützt wird.

Erfindungsgemäß bildet also die Kühleinrichtung zugleich die Tragstruktur, welche das Statorpaket mit dem Grundkörper verbindet.

In der Regel ist die Kühleinrichtung die einzige Kühleinrichtung der elektrischen Maschine. Die elektrische Maschine weist also außer der bereits genannten Kühleinrichtung keine weitere Kühleinrichtung auf.

In der Regel weist das Statorpaket von der Rotationsachse einen Mindestabstand auf. In einer bevorzugten Ausgestaltung der vorliegenden Erfindung ist das Statorpaket an die Kühleinrichtung mittels elektromagnetisch inaktiver Koppelelemente thermisch angekoppelt, welche von der Rotationsachse teilweise einen Abstand aufweisen, der größer als der Mindestabstand ist, und teilweise einen Abstand aufweisen, der kleiner als der Mindestabstand ist. Die Koppelelemente stellen also eine Art Brücke dar, über welche die im Statorpaket entstehende Wärme in die Kühleinrichtung eingeleitet wird.

Für die Ausgestaltung der Koppelelemente existieren verschiedene Möglichkeiten. Beispielsweise ist es möglich, dass das Statorpaket eine Anzahl von Statorblechen aufweist, die in Richtung der Rotationsachse gesehen aufeinander gestapelt sind, dass die Koppelelemente, soweit sie von der Rotationsachse einen Abstand aufweisen, der größer als der Mindestabstand ist, als zwischen je zwei der Statorbleche angeordnete Zwischenschichten ausgebildet sind und dass die Zwischenschichten sich einstückig über den Mindestabstand hinaus in den Bereich der Kühleinrichtung hinein erstrecken.

Das Material der Zwischenschichten kann nach Bedarf gewählt sein. Beispielsweise können die Zwischenschichten aus einem Kunststoff bestehen, insbesondere aus einem Faserverbundwerkstoff. Geeignete Faserverbundwerkstoffe sind beispielsweise kohlefaserverstärkter Kunststoff (CFK) oder glasfaserverstärkter Kunststoff (GFK).

Alternativ oder zusätzlich ist es möglich, dass die Zwischenschichten aus einem Material bestehen, das eine Vorzugswärmeleitrichtung aufweist. Derartige Materialien - insbesondere kohlefaserverstärkte Kunststoffe - sind Fachleuten bekannt. In diesem Fall ist die Vorzugswärmeleitrichtung vorzugsweise sowohl innerhalb des Statorpakets als auch außerhalb des Statorpakets radial orientiert ist.

Alternativ ist es möglich, dass die Zwischenschichten aus einem Metall bestehen.

Vorzugsweise ist vorgesehen, dass die Kühleinrichtung eine Anzahl von Teilstrukturen aufweist, dass die Teilstrukturen jeweils eine Mittelschicht aufweisen, die keine der Zwischenschichten enthält, und dass die Mittelschichten in Richtung der Rotationsachse gesehen auf beiden Seiten jeweils von einer Gruppe von Zwischenschichten begrenzt sind. Durch diese Ausgestaltung ergibt sich auf besonders einfache Weise eine sehr stabile und belastbare Kühleinrichtung.

Die Anzahl an ersten Zwischenschichten pro Gruppe von Zwischenschichten kann nach Bedarf sein. Es ist möglich, dass die entsprechende Anzahl gleich eins ist. Alternativ ist es möglich, dass die entsprechende Anzahl größer als eins ist, beispielsweise drei bis sechs.

Die Mittelschichten können nach Bedarf ausgebildet sein. Beispielsweise ist es möglich, dass die Mittelschichten aus einem Strukturschaum bestehen. Alternativ können die Mittelschichten aus einer Sandwichstruktur bestehen. In diesem Fall weist die Sandwichstruktur vorzugsweise zwei Deckschichten und eine zwischen den Deckschichten angeordnete Wabenstruktur auf.

Alternativ zur Ausbildung der Koppelelemente als Zwischenschichten ist es möglich, dass die Koppelelemente als Kühlleitungen ausgebildet sind, die teilweise im Statorpaket und teilweise in der Kühleinrichtung verlaufen oder in die Kühleinrichtung münden und in denen sich ein flüssiges Kühlmedium befindet. Durch diese Ausgestaltung lässt sich auf einfache Weise eine leichte und kompakte flüssigkeitsgekühlte elektrische Maschine realisieren.

Im Falle einer Flüssigkeitskühlung weist die Einrichtung vorzugsweise eine Kühlmediumpumpe auf, mittels derer das in den Kühlleitungen befindliche Kühlmedium zwangsumgewälzt wird.

Vorzugsweise ist die Kühleinrichtung quer zur Rotationsachse gesehen vollflächig als Gitterstruktur ausgebildet. Dadurch ergibt sich eine besonders hohe Kühlleistung.

Die erfindungsgemäße Einrichtung kann im übrigen nach Bedarf ausgebildet sein. Besonders bevorzugt ist jedoch eine Anwendung im Bereich der Luftfahrt, wenn also der Grundkörper Bestandteil eines Luftfahrzeugs ist, insbesondere eines Hubschraubers.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: eine Einrichtung mit einer elektrischen Maschine,
- FIG 2: einen Längsschnitt durch eine elektrische Maschine,
- FIG 3: ein Statorpaket und eine Kühleinrichtung,
- FIG 4: eine Draufsicht auf eine Zwischenschicht,
- FIG 5: einen detaillierteren Längsschnitt durch eine elektrische Maschine und
- FIG 6: eine Draufsicht auf eine Kühleinrichtung.

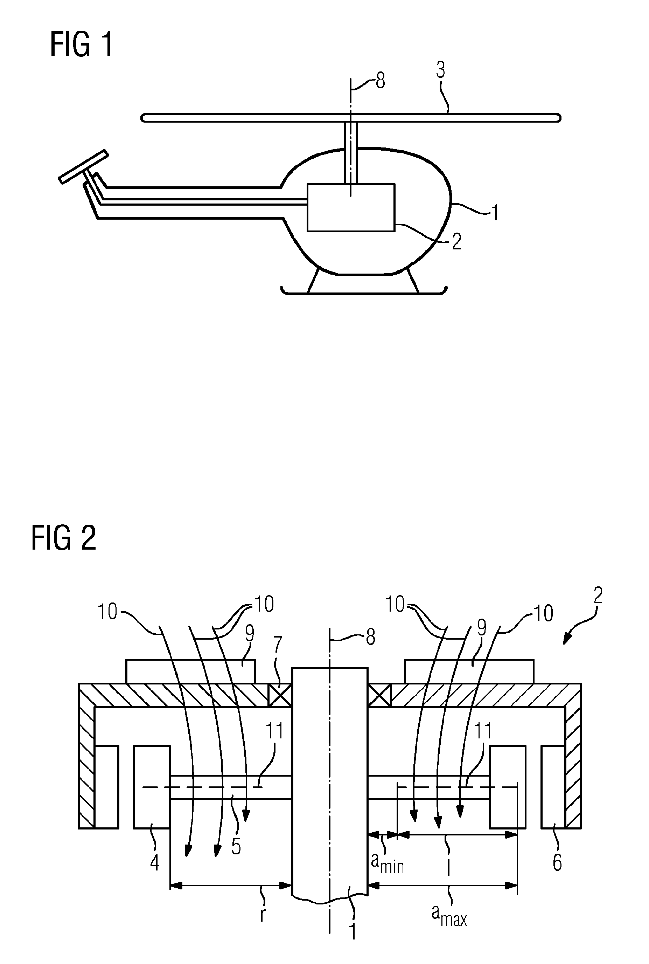

Gemäß Figur 1 weist eine - prinzipiell beliebige - Einrichtung einen Grundkörper 1 auf. Gemäß Figur 1 ist der Grundkörper 1 Bestandteil eines Luftfahrzeugs, nämlich eines Hubschraubers. Diese Darstellung ist jedoch rein beispielhaft. Prinzipiell könnte der Grundkörper 1 eine beliebige Gestalt aufweisen.

Im Grundkörper 1 oder am Grundkörper 1 ist eine elektrische Maschine 2 angeordnet. Die elektrische Maschine 2 treibt ein Aggregat 3 der Einrichtung an. Insbesondere kann die elektrische Maschine 2 als Hauptantrieb der Einrichtung ausgebildet sein. Im Falle eines Luftfahrzeugs ist das Aggregat 3 beispielsweise als Vor- und/oder Auftrieb generierende Luftschraube ausgebildet. Das Wort "Rotor" wird in diesem Zusammenhang absichtlich vermieden, weil es später in Verbindung mit der elektrischen Maschine 2 als solcher benötigt wird. Gemäß Figur 2 weist die elektrische Maschine 2 ein Statorpaket 4 auf. Das Statorpaket 4 ist gemäß Figur 2 über eine Kühleinrichtung 5 mit dem Grundkörper 1 verbunden. Die Kühleinrichtung 5 wird später noch näher erläutert werden.

Die elektrische Maschine 2 weist weiterhin einen Rotor 6 auf. Der Rotor 6 wirkt mit dem Statorpaket 4 elektromagnetisch zusammen. Zwischen dem Statorpaket 4 und dem Rotor 6 bildet sich somit die elektromotorische Kraft aus. Der Rotor 6 ist in (mindestens) einer Lagereinrichtung 7 gelagert, so dass der Rotor 6 um eine Rotationsachse 8 rotierbar ist.

Soweit nachfolgend die Begriffe "axial", "radial" und "tangential" verwendet werden, sind sie stets auf die Rotationsachse 8 bezogen. Axial ist eine Richtung parallel zur Rotationsachse 8. Radial ist eine Richtung orthogonal zur Rotationsachse 8 auf die Rotationsachse 8 zu oder von ihr weg. Tangential ist eine Richtung orthogonal zur Rotationsachse 8 und orthogonal zur Radialrichtung. Tangential ist also eine Richtung, die in konstantem radialem Abstand und bei konstanter Axialposition kreisförmig um die Rotationsachse 8 herum gerichtet ist.

Gemäß Figur 2 ist der Rotor 6 als Außenläufer ausgebildet. Das Statorpaket 4 ist somit zwar bei der gleichen Axialposition angeordnet wie der Rotor 6, radial zur Rotationsachse 8 gesehen ist das Statorpaket 4 jedoch zwischen dem Rotor 6 und der Rotationsachse 8 angeordnet.

Das Statorpaket 4 ist an die Kühleinrichtung 5 thermisch angekoppelt. Während des Betriebes der elektrischen Maschine 2 im Statorpaket 4 entstehende Wärme wird daher in die Kühleinrichtung 5 eingeleitet. Entsprechende Möglichkeiten zur Ankopplung des Statorpakets 4 an die Kühleinrichtung 5 werden später näher erläutert werden.

Der Rotor 6 weist gemäß Figur 2 Lüfterschaufeln 9 auf. Mittels der Lüfterschaufeln 9 wird im Betrieb der elektrischen Maschine 2 - also während des Rotierens des Rotors 6 - der Kühleinrichtung 5 in Axialrichtung Kühlluft 10 zugeführt. Die zugeführte Kühlluft 10 durchströmt die Kühleinrichtung 5. Mittels der Kühlluft 10 wird die in die Kühleinrichtung 5 eingeleitete Wärme aus der Kühleinrichtung 5 abgeführt. Alternativ zu einer Zwangsbelüftung ist jedoch - insbesondere bei vertikaler Orientierung der Rotationsachse 8 - auch eine Wärmeabfuhr aus der Kühleinrichtung 5 durch natürliche Konvektion möglich.

Gemäß Figur 2 ist das Statorpaket 4 über die Kühleinrichtung 5 mit dem Grundkörper 1 verbunden. Der Grundkörper 1 ist gemäß Figur 2 radial innerhalb des Statorpakets 4 angeordnet. Die Kühleinrichtung 5 erstreckt sich daher, ausgehend vom Statorpaket 4, nach radial innen auf die Rotationsachse 8 zu. Mittels der Kühleinrichtung 5 ist das Statorpaket 4 relativ zum Grundkörper 1 axial und radial fixiert. Ein im Betrieb der elektrischen Maschine 2 zwischen dem Statorpaket 4 und dem Rotor 6 wirkendes Drehmoment wird mittels der Kühleinrichtung 5 am Grundkörper 1 abgestützt. Die Kühleinrichtung 5 dient also nicht nur zum Kühlen des Statorpakets 4, sondern wirkt zusätzlich als das Statorpaket 4 tragende Struktur.

Die Kühleinrichtung 5 ist vorzugsweise die einzige Kühleinrichtung der elektrischen Maschine 2. Über die Kühleinrichtung 5 hinaus weist die elektrische Maschine 2 somit vorzugsweise keine weitere Kühleinrichtung auf.

Nachfolgend werden mögliche Ausgestaltungen der Ankopplung des Statorpakets 4 an die Kühleinrichtung 5 näher erläutert.

Das Statorpaket 4 weist gemäß Figur 2 von der Rotationsachse 8 einen Mindestabstand r auf. Um die im Statorpaket 4 entstehende Wärme effizient in die Kühleinrichtung 5 einleiten zu können, ist das Statorpaket 4 mittels Koppelelementen 11 an die Kühleinrichtung 5 thermisch angekoppelt. Die Koppelelemente 11 sind elektromagnetisch inaktiv. Die Koppelelemente 11 erstrecken sich in Radialrichtung über eine bestimmte Länge 1. Aufgrund ihrer Längenerstreckung weisen die Koppelelemente 11 von der Rotationsachse 8 einen Abstand auf, der - je nachdem, welche Stelle der Koppelelemente 11 betrachtet wird - zwischen einem Minimalwert amin und einem Maximalwert amax liegt. Der Mindestabstand r des Statorpakets 4 liegt zwischen dem Minimalwert amin und dem Maximalwert amax. Anders ausgedrückt: Die Koppelelemente 11 weisen teilweise von der Rotationsachse 8 einen Abstand auf, der größer als der Mindestabstand r ist, und teilweise einen Abstand auf, der kleiner als der Mindestabstand r ist. Mögliche Ausgestaltungen der Koppelelemente 11 werden nachfolgend in Verbindung mit den weiteren Figuren näher erläutert werden.

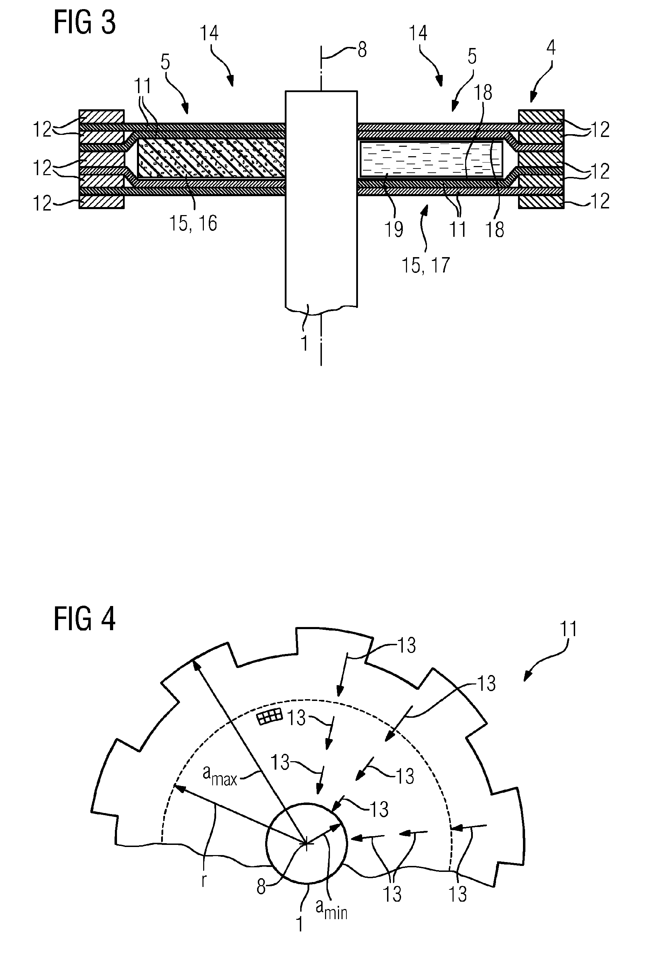

Das Statorpaket 4 weist - wie allgemein üblich - eine Anzahl von Statorblechen 12 auf. Die Statorbleche 12 sind in Richtung der Rotationsachse 8 gesehen aufeinander gestapelt. Soweit die Koppelelemente 11 von der Rotationsachse 8 einen Abstand aufweisen, der größer als der Mindestabstand r ist, sind sie im Bereich des Statorpakets 4 angeordnet. Es ist gemäß Figur 3 möglich, dass die Koppelelemente 11 in diesem Bereich als Zwischenschichten ausgebildet sind, die zwischen je zwei der Statorbleche 12 angeordnet sind. In diesem Fall erstrecken sich die Zwischenschichten 11 einstückig über den Mindestabstand r hinaus in den Bereich der Kühleinrichtung 5 hinein.

Die Zwischenschichten 11 können aus einem (nicht magnetischen) Metall bestehen, beispielsweise Aluminium oder Kupfer. Alternativ können die Zwischenschichten 11 beispielsweise aus einem Kunststoff bestehen, insbesondere einem Faserverbundwerkstoff. Geeignete Faserverbundwerkstoffe sind beispielsweise kohlefaserverstärkte Kunststoffe oder glasfaserverstärkte Kunststoffe.

Es ist möglich, dass die Zwischenschichten 11 aus einem Material bestehen, das eine Vorzugswärmeleitrichtung aufweist. Beispielsweise weisen manche kohlefaserverstärkte Kunststoffe eine derartige Eigenschaft auf. Falls die Zwischenschichten 11 aus einem derartigen Material bestehen, ist die Vorzugswärmeleitrichtung 13 vorzugsweise sowohl innerhalb des Statorpakets 4 als auch außerhalb des Statorpakets 4 radial orientiert. Die Figur 4 zeigt eine entsprechende mögliche Ausgestaltung.

Gemäß Figur 4 besteht die Zwischenschicht 11 im Bereich des Statorpakets 4 im Wesentlichen aus Vollmaterial. Im Bereich der Kühleinrichtung 5 weist die Zwischenschicht 11 hingegen eine Gitterstruktur auf. Hierauf wird später noch näher eingegangen werden.

Gemäß Figur 3 weist die Kühleinrichtung 5 eine Anzahl von Teilstrukturen 14 auf. Minimal ist eine einzige Teilstruktur 14 vorhanden. Alternativ kann die Anzahl an Teilstruktur 14 größer als eins sein. Die Teilstrukturen 14 weisen jeweils eine Mittelschicht 15 auf. Die Mittelschichten 15 enthalten keine der Zwischenschichten 11. Die Mittelschichten 15 sind axial auf beiden Seiten jeweils von einer Gruppe von Zwischenschichten 11 begrenzt.

Die Mittelschichten 15 können beispielsweise aus einem Strukturschaum 16 bestehen. Dies ist in Figur 3 auf der linken Seite dargestellt. Alternativ können die Mittelschichten 15 aus einer Sandwichstruktur 17 bestehen. Dies ist in Figur 3 auf der rechten Seite dargestellt. Die Sandwichstruktur 17 weist, sofern sie vorhanden ist, ihrerseits zwei Deckschichten 18 und eine Wabenstruktur 19 auf. Die Deckschichten 18 grenzen jeweils an eine der Gruppen von Zwischenschichten 11 an.

Die Anzahl an Zwischenschichten 11 pro Gruppe von Zwischenschichten 11 kann nach Bedarf gewählt sein. Sie kann eins sein oder größer als eins sein, beispielsweise gemäß Figur 3 zwischen drei und sechs liegen.

In der Regel sind mehrere Teilstrukturen 14 vorhanden. Es ist möglich, dass die Teilstrukturen 14 in Richtung der Rotationsachse 8 gesehen ineinander übergehen, d.h. dass eine Gruppe von ersten Zwischenschichten 10 gleichzeitig an zwei Mittelschichten 15 angrenzt.

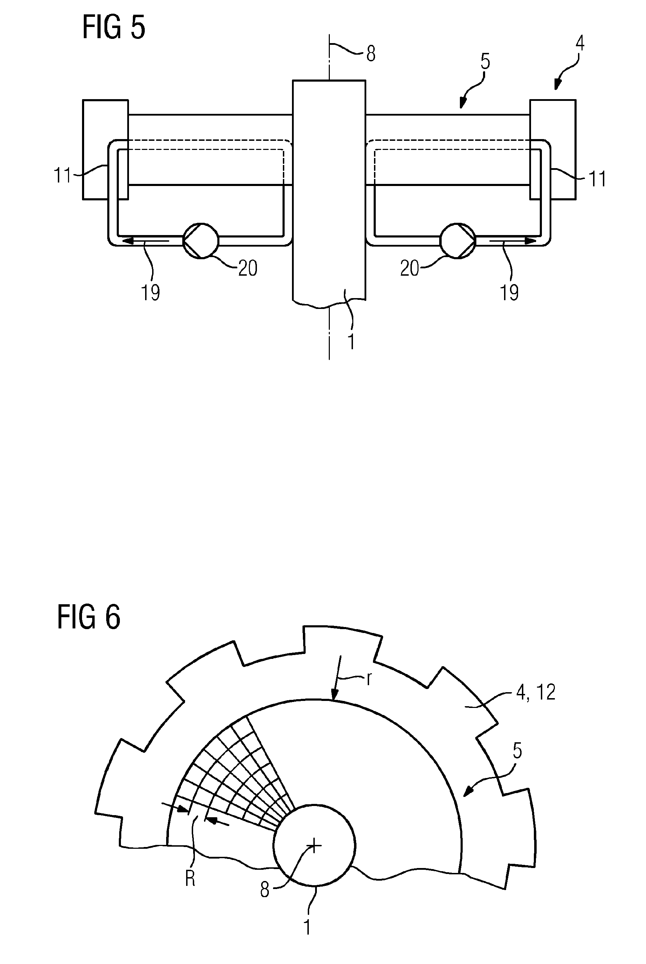

Alternativ zu einer Ausgestaltung als Zwischenschichten können die Koppelelemente 11 gemäß Figur 5 als Kühlleitungen ausgebildet sein. In diesem Fall verlaufen die Kühlleitungen 11 gemäß Figur 5 teilweise im Statorpaket 4 und teilweise in der Kühleinrichtung 5. Alternativ zu einem Verlauf in der Kühleinrichtung 5 können sie auch in die Kühleinrichtung 5 münden. In den Kühlleitungen 11 befindet sich ein flüssiges Kühlmedium 19, beispielsweise Wasser. Besonders bevorzugt ist, wenn in den Kühlmediumkreislauf eine Kühlmediumpumpe 20 eingeschleift ist. Es ist also bevorzugt, dass die Einrichtung die Kühlmediumpumpe 20 aufweist und dass mittels der Kühlmediumpumpe 20 das in den Kühlleitungen 11 befindliche Kühlmedium 19 zwangsumgewälzt wird.

Zur Optimierung der erreichbaren Kühlleistung, d.h. der aus der Kühleinrichtung 5 abführbaren Wärmemenge, ist die Kühleinrichtung 5 quer zur Rotationsachse 8 gesehen vorzugsweise entsprechend der Darstellung von Figur 6 vollflächig als Gitterstruktur ausgebildet ist. Ein anzustrebendes Rastermaß R der Gitterstruktur sollte einerseits klein genug sein, um eine große Oberfläche zur Kühlluft 10 zu gewährleisten. Andererseits sollte das Rastermaß R groß genug sein, um den Durchtritt der Kühlluft 10 durch die Gitterstruktur nicht zu behindern. In Versuchen und Simulationen hat sich als vorteilhaft erwiesen, wenn das Rastermaß R zwischen 4x4 mm und 10x10 mm liegt. Die Gitterstruktur kann hierbei quadratisch sein. Alternativ sind auch rechteckige, polygonale (beispielsweise wabenförmige) oder andere Querschnitte möglich.

Die vorliegende Erfindung weist viele Vorteile auf. Insbesondere kann durch die Integration der Tragfunktion in die Kühleinrichtung 5 eine relativ einfache, kostengünstige, Platz sparende und darüber hinaus sehr leichte Lösung für eine elektrische Maschine 2 geschaffen werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Einrichtung,
- wobei die Einrichtung einen Grundkörper (1) und eine elektrische Maschine (2) aufweist,
- wobei die elektrische Maschine (2) ein Statorpaket (4) und einen Rotor (6) aufweist,
- wobei der Rotor (6) relativ zum Statorpaket (4) in einer Lagereinrichtung (7) gelagert ist, so dass der Rotor (6) relativ zum Statorpaket (4) um eine Rotationsachse (8) rotierbar ist,
- wobei der Rotor (6) als Außenläufer ausgebildet ist, so dass radial zur Rotationsachse (8) gesehen das Statorpaket (4) zwischen dem Rotor (6) und der Rotationsachse (8) angeordnet ist,
- wobei der Grundkörper (1) zumindest teilweise radial innerhalb des Statorpakets (4) angeordnet ist,
- wobei das Statorpaket (4) an eine Kühleinrichtung (5) thermisch angekoppelt ist, so dass im Statorpaket (4) entstehende Wärme in die Kühleinrichtung (5) eingeleitet wird,
- wobei die in die Kühleinrichtung (5) eingeleitete Wärme mittels die Kühleinrichtung (5) axial durchströmender Kühlluft (10) aus der Kühleinrichtung (5) abgeführt wird,
- wobei das Statorpaket (4) über die Kühleinrichtung (5) mit dem Grundkörper (1) verbunden ist, so dass das Statorpaket (4) mittels der Kühleinrichtung (5) relativ zum Grundkörper (1) axial und radial fixiert ist und ein zwischen dem Statorpaket (4) und dem Rotor (6) wirkendes Drehmoment mittels der Kühleinrichtung (5) am Grundkörper (1) abgestützt wird.

2. Einrichtung nach Anspruch 1,
**dadurch gekennzeichnet, dass** die elektrische Maschine (2) keine weitere Kühleinrichtung aufweist.

3. Einrichtung nach Anspruch 1 oder 2,
**dadurch gekennzeichnet, dass** das Statorpaket (4) von der Rotationsachse (8) einen Mindestabstand (r) aufweist, dass das Statorpaket (4) an die Kühleinrichtung (5) mittels elektromagnetisch inaktiver Koppelelemente (11) thermisch angekoppelt ist und dass die Koppelelemente (11) von der Rotationsachse (8) teilweise einen Abstand aufweisen, der größer als der Mindestabstand (r) ist, und teilweise einen Abstand aufweisen, der kleiner als der Mindestabstand (r) ist.

4. Einrichtung nach Anspruch 3,
**dadurch gekennzeichnet, dass** das Statorpaket (4) eine Anzahl von Statorblechen (12) aufweist, die in Richtung der Rotationsachse (8) gesehen aufeinander gestapelt sind, dass die Koppelelemente (11), soweit sie von der Rotationsachse (8) einen Abstand aufweisen, der größer als der Mindestabstand (r) ist, als zwischen je zwei der Statorbleche (12) angeordnete Zwischenschichten (11) ausgebildet sind und dass die Zwischenschichten (11) sich einstückig über den Mindestabstand (r) hinaus in den Bereich der Kühleinrichtung (5) hinein erstrecken.

5. Einrichtung nach Anspruch 4,
**dadurch gekennzeichnet, dass** die Zwischenschichten (11) aus einem Kunststoff bestehen, insbesondere aus einem Faserverbundwerkstoff.

6. Einrichtung nach Anspruch 4 oder 5,
**dadurch gekennzeichnet, dass** die Zwischenschichten (11) aus einem Material bestehen, das eine Vorzugswärmeleitrichtung (13) aufweist, und dass die Vorzugswärmeleitrichtung (13) sowohl innerhalb des Statorpakets (4) als auch außerhalb des Statorpakets (4) radial orientiert ist.

7. Einrichtung nach Anspruch 4,
**dadurch gekennzeichnet, dass** die Zwischenschichten (11) aus einem Metall bestehen.

8. Einrichtung nach einem der Ansprüche 4 bis 7,
**dadurch gekennzeichnet, dass** die Kühleinrichtung (5) eine Anzahl von Teilstrukturen (14) aufweist, dass die Teilstrukturen (14) jeweils eine Mittelschicht (15) aufweisen, die keine der Zwischenschichten (11) enthält, und dass die Mittelschichten (15) in Richtung der Rotationsachse (8) gesehen auf beiden Seiten jeweils von einer Gruppe von Zwischenschichten (11) begrenzt sind.

9. Einrichtung nach Anspruch 8,
**dadurch gekennzeichnet, dass** die Mittelschichten (15) aus einem Strukturschaum (16) oder einer Sandwichstruktur (17) bestehen, wobei die Sandwichstruktur (17) zwei Deckschichten (18) und eine zwischen den Deckschichten (18) angeordnete Wabenstruktur (19) aufweist.

10. Einrichtung nach Anspruch 3,
**dadurch gekennzeichnet, dass** die Koppelelemente (11) als Kühlleitungen (11) ausgebildet sind, die teilweise im Statorpaket (4) und teilweise in der Kühleinrichtung (5) verlaufen oder in die Kühleinrichtung (5) münden und in denen sich ein flüssiges Kühlmedium (19) befindet.

11. Einrichtung nach Anspruch 10,
**dadurch gekennzeichnet, dass** sie eine Kühlmediumpumpe (20) aufweist, mittels derer das in den Kühlleitungen (11) befindliche Kühlmedium (19) zwangsumgewälzt wird.

12. Einrichtung nach einem der obigen Ansprüche,
**dadurch gekennzeichnet, dass** die Kühleinrichtung (5) quer zur Rotationsachse (8) gesehen vollflächig als Gitterstruktur ausgebildet ist.

13. Einrichtung nach einem der obigen Ansprüche,
**dadurch gekennzeichnet, dass** der Grundkörper (1) Bestandteil eines Luftfahrzeugs ist, insbesondere eines Hubschraubers.
